# EUROPÄISCHE PATENTSCHRIFT

(11) **EP 2 345 350 B1**
(45) Veröffentlichungstag und Bekanntmachung des Hinweises auf die Patenterteilung: **30.10.2013**
(21) Anmeldenummer: 11150698.6
(22) Anmeldetag: 12.01.2011
(51) Int. Cl.: A47J 27/62, A47J 27/08, A47J 27/14, A47J 36/10

(54) **Gargerätevorrichtung**
Cooking device
Appareil de cuisson

(30) Priorität: 18.01.2010 ES 201030049
(43) Veröffentlichungstag der Anmeldung: 20.07.2011
(73) Patentinhaber: BSH Bosch und Siemens Hausgeräte GmbH, 81739 München (DE)
(72) Erfinder: Franco Gutierrez, Carlos, 50017 Zaragoza (ES); Llorente Gil, Sergio, 50009 Zaragoza (ES); Paesa García, David, 50015 Zaragoza (ES); Sagües Blázquiz, Carlos, 50018 Zaragoza (ES)

(56) Entgegenhaltungen:
- DE-A1- 4 414 825
- DE-A1- 10 111 437

## Beschreibung

Die Erfindung geht aus von einer Gargerätevorrichtung nach dem Oberbegriff des Anspruchs 1.

Aus der Druckschrift DE 101 11 437 A1 ist eine Vorrichtung zur automatischen Verriegelung eines Garraums mit einem zugeordneten Deckel bekannt. Dabei ist ein Sensor vorgesehen, der eine Stellung des Deckels erfasst und ein Signal ausgibt, das eine geschlossene Stellung des Deckels anzeigt. Eine Steuerung empfängt das Signal von dem Sensor und bewirkt eine Bewegung eines Verriegelungsdorns von dessen entriegelter Stellung in dessen verriegelte Stellung, wenn das Signal anzeigt, dass der Deckel geschlossen ist.

Die Aufgabe der Erfindung besteht insbesondere darin, eine Gargerätevorrichtung mit verbesserten Eigenschaften hinsichtlich seiner Anwendungsmöglichkeiten bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

Die Erfindung geht aus von einer Gargerätevorrichtung mit einer Auswerteeinheit zur Ermittlung eines Verschlussstatus eines Gargefäßes.

Es wird vorgeschlagen, dass die Auswerteeinheit dazu vorgesehen ist, den Verschlussstatus zumindest abhängig von wenigstens einer erfassten Leistungskenngröße zu ermitteln. Unter einer "Auswerteeinheit" soll dabei insbesondere eine Einheit verstanden werden, die eine Recheneinheit, eine Speichereinheit und ein in der Speichereinheit gespeichertes Betriebsprogramm aufweist. Unter "vorgesehen" soll insbesondere speziell ausgestattet, ausgelegt und/oder vorzugsweise programmiert verstanden werden. Unter einem "Verschlussstatus" soll insbesondere ein Status verstanden werden, der charakterisiert, ob das Gargefäß unverschlossen oder mit einem Deckel verschlossen ist und insbesondere auch, wie dicht das Gargefäß verschlossen ist. Ferner soll unter einer "Leistungskenngröße" insbesondere eine Kenngröße verstanden werden, die einen Informationsgehalt darüber enthält, wie viel Heizleistung verbraucht und insbesondere in das Gargefäß eingebracht wird. Durch eine entsprechende Ausgestaltung können einfach vorteilhafte Anwendungsmöglichkeiten geschaffen werden. Insbesondere kann eine entsprechende Gargerätevorrichtung vorteilhaft bei Haushaltsgeräten eingesetzt werden. Es können vorteilhaft vorhandene Sensoreinheiten genutzt werden und es kann insgesamt der Energieverbrauch vorteilhaft reduziert werden.

Ist die Auswerteeinheit dazu vorgesehen, den Verschlussstatus zumindest abhängig von einer erfassten Temperaturkenngröße zu ermitteln, kann eine vorteilhaft einfache und präzise Auswertung ermöglicht werden.

In einer weiteren Ausgestaltung der Erfindung wird vorgeschlagen, dass die Auswerteeinheit dazu vorgesehen ist, abhängig von wenigstens einer Kenngröße einen Ermittlungsvorgang zur Ermittlung des Verschlussstatus zumindest teilautomatisiert abzubrechen und/oder zu aktivieren. Durch eine entsprechende Ausgestaltung können Fehlsignale vorteilhaft vermieden werden, und zwar indem ein Ermittlungsvorgang nur vollständig durchgeführt und/oder aktiviert wird, wenn mit einer gewünscht hohen Sicherheit auf einen korrekten Verschlussstatus geschlossen werden kann. Dabei soll eine Ausgabe eines den ermittelten Verschlussstatus charakterisierendes Signal insbesondere noch zu dem Ermittlungsvorgang gehörig angesehen werden und somit soll unter einem "Abbruch eines Ermittlungsvorgangs" insbesondere auch verstanden werden, dass am Ende des Ermittlungsvorgangs kein Verschlussstatussignal, welches einen ermittelten Verschlussstatus charakterisiert, ausgegeben wird und/oder insbesondere ein Signal ausgegeben wird, welches darauf schließen lässt, dass eine Zutreffsicherheit des ermittelten Verschlussstatus unterhalb eines vorgegebenen Werts liegt.

Ferner wird vorgeschlagen, dass die Auswerteeinheit dazu vorgesehen ist, als Bedingung, insbesondere für eine vollständige Durchführung des Ermittlungsvorgangs, wenigstens eine Kenngröße für einen zumindest im Wesentlichen konstanten Heizprozess zu nutzen. Dabei soll unter einem "im Wesentlichen konstanten Heizprozess" insbesondere ein Prozess nach einem Aufheizvorgang auf eine Solltemperatur verstanden werden, d.h. insbesondere der Prozess, nach dem eine vorliegende Gartemperatur zumindest erstmalig eine eingestellte Solltemperatur erreicht hat und mittels eines Regelvorgangs die vorliegende Gartemperatur auf die Solltemperatur geregelt wird. Durch eine entsprechende Ausgestaltung kann vorteilhaft eine exakte Ermittlung mit einer hohen Zutreffsicherheit erreicht werden.

Ferner kann eine vorteilhaft hohe Zutreffsicherheit erreicht werden, wenn die Auswerteeinheit dazu vorgesehen ist, als Bedingung, insbesondere für eine vollständige Durchführung des Ermittlungsvorgangs, eine Aktivierung eines Garautomatikmodus, wenigstens eine auf einen Wasserheizprozess schließende Kenngröße und/oder zumindest ein Erreichen wenigstens eines Grenzwerts wenigstens einer Kenngröße zu nutzen. Dabei soll unter einem "Garautomatikmodus" insbesondere ein Modus verstanden werden, bei dem eine Temperaturkenngröße auf eine bestimmte Sollgröße geregelt wird und/oder auf einen bestimmten Sollgrößenverlauf, wie insbesondere bei einem automatisierten Garprogramm. Unter einem "Wasserheizprozess" soll insbesondere ein Prozess verstanden werden, bei dem Wasser einen wesentlichen Bestandteil eines Inhalts des Gargefäßes darstellt, wie insbesondere zumindest zu einem Zeitpunkt mehr als 20% und vorzugsweise mehr als 40% und insbesondere zumindest zu Beginn eines Garprozesses mehr als 80%, wie dies insbesondere bei einer Zubereitung von Gerichten in erhitztem Wasser der Fall ist, wie beispielsweise von Nudeln und/oder Gemüse in erhitztem Wasser, oder bei Suppen usw. Die Auswerteeinheit kann dabei auf verschiedene, dem Fachmann als sinnvoll erscheinende Arten ausgebildet sein. Vorzugsweise kann die Auswerteeinheit dazu vorgesehen sein, ausgehend von einem gewählten Garprogramm und/oder ausgehend von einer erfassten Gewichtskenngröße und/oder einer erfassten optischen Kenngröße usw. auf eine entsprechende Kenngröße zu schließen. Dabei kann die Gargerätevorrichtung zur Erfassung von Kenngrößen eigene Sensoreinheiten aufweisen und/oder es können Informationen von dritten Sensoreinheiten genutzt werden. Der Grenzwert kann von verschiedenen, dem Fachmann als sinnvoll erscheinenden Kenngrößenwerten gebildet sein, wie von einem Leitungskenngrößenwert und/oder vorteilhaft von einem Temperaturkenngrößenwert. Besonders vorteilhaft wird der Ermittlungsvorgang erst aktiviert, wenn eine Temperaturkenngröße vorliegt, die über einem Grenzwert liegt, die zumindest auf eine Gartemperatur von 50°C schließen lässt. Besonders bei einem Wasserheizprozess kann durch Verschließen eines Gargefäßes ein Verdunsten des Wassers zumindest reduziert werden, wie insbesondere durch eine mögliche Druckerhöhung im Gargefäß, wodurch insbesondere bei Wasserheizprozessen eine vorteilhafte Ermittlung des Verschlussstatus möglich ist und besonders vorteilhaft Energie eingespart werden kann.

In einer weiteren Ausgestaltung der Erfindung wird vorgeschlagen, dass die Auswerteeinheit dazu vorgesehen ist, wenigstens eine ermittelte Kenngröße mit einer gespeicherten Kenngröße, möglicherweise auch einen ermittelten Kenngrößenverlauf mit einem gespeicherten Kenngrößenverlauf, zu vergleichen, um den Verschlussstatus zu ermitteln und/oder um zumindest auf eine Gargutgruppe zu schließen, wodurch eine vorteilhafte Auswertung erreicht werden kann. Vorzugsweise sind zumindest für ein Gargut, wie insbesondere auch Wasser, und vorzugsweise für mehrere Gargüter Informationen in der Auswerteeinheit hinterlegt. Vorzugsweise kann die Auswerteeinheit auch dazu vorgesehen sein, bereits nach einer Inbetriebnahme, insbesondere nach einer Inbetriebnahme in einem Haushalt, Informationen aufzunehmen und zu speichern, um neue, gespeicherte Kenngrößen und/oder Kenngrößenverläufe zu erhalten. Durch eine entsprechende Ausgestaltung kann ein selbstlernendes System erreicht und es kann eine vorteilhafte Anpassung an vorliegende Randparameter erzielt werden.

Ferner wird vorgeschlagen, dass die Auswerteeinheit dazu vorgesehen ist, wenigstens ein Warnsignal auszugeben, wenn ein bestimmter Verschlussstatus ermittelt wurde, wodurch eine vorteilhafte Aktion von einem Bediener und/oder einer Geräteeinheit bewirkt werden kann. Dabei kann das Warnsignal ein Steuersignal an eine Einheit, wie an eine Ausgabeeinheit und/oder an eine Schalteinheit, sein, und/oder kann ein Ausgabesignal direkt an einen Bediener sein, wie beispielsweise ein optisches, akustisches und/oder taktiles Signal. Vorzugsweise wird insbesondere ein Warnsignal ausgegeben, wenn ein auf ein unverschlossenes Gargerät schließender Verschlussstatus ermittelt wurde.

Weist die Gargerätevorrichtung wenigstens eine Sensoreinheit auf, die zumindest teilweise einstückig mit einer Garautomatiksensoreinheit ausgeführt ist, können zusätzliche Bauteile, Bauraum, Montageaufwand und Kosten eingespart werden. Dabei soll unter einer "Garautomatiksensoreinheit" insbesondere eine Sensoreinheit verstanden werden, die dazu vorgesehen ist, wenigstens eine für einen Automatikgarmodus erforderliche Kenngröße zu erfassen, wie insbesondere eine Temperatursensoreinheit, die dazu vorgesehen ist, eine Temperaturkenngröße zu erfassen, um eine Temperaturkenngröße während eines Automatikgarmodus auf eine bestimmte Solltemperaturkenngröße zu regeln. Die Sensoreinheit kann verschiedene, dem Fachmann als sinnvoll erscheinende Sensormittel aufweisen, wie Infrarotsensormittel, Widerstandssensormittel und/oder auch Sensormittel, die direkt an einem Gargefäß angebracht werden können. Die Leistungskenngröße kann ebenfalls durch verschiedene, dem Fachmann als sinnvoll erscheinende Mittel erfasst werden. Besonders vorteilhaft wird jedoch auf die Leistungskenngröße aus einer vorliegenden Steuerung und/oder vorzugsweise Regelung einer Steuer- und/oder Regeleinheit geschlossen.

Die erfindungsgemäße Gargerätevorrichtung kann bei verschiedenen, dem Fachmann als sinnvoll erscheinenden Gargeräten eingesetzt werden, wie insbesondere bei Mikrowellengargeräten, Backöfen und besonders vorteilhaft bei Kochmuldenvorrichtungen mit einer Kochfeldplatte.

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung eines Haushaltsgeräts mit einer erfindungsgemäßen Gargerätevorrichtung,
- Fig. 2: ein Diagramm mit Leistungs- und Temperaturkenngrößen über der Zeit bei einem geschlossenen Gargefäß,
- Fig. 3: ein Diagramm mit Leistungs- und Temperaturkenngrößen über der Zeit bei einem unverschlossenen Gargefäß und
- Fig. 4: ein Leistungs-Temperatur-Diagramm bei stationären Zuständen.

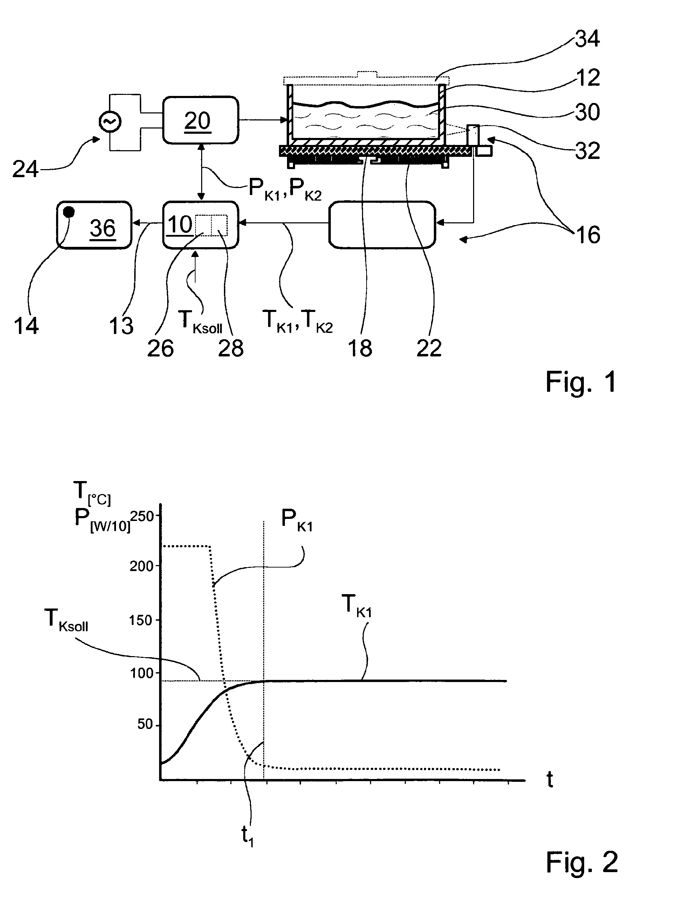

Figur 1 zeigt eine schematische Darstellung eines von einer Kochmuldenvorrichtung gebildeten Haushaltsgeräts mit einer erfindungsgemäßen Gargerätevorrichtung. Das Haushaltsgerät weist eine Kochfeldplatte 18 mit einem Induktionsheizelement auf, das einen Inverter 20 und einen unter der Kochfeldplatte 18 angeordneten Induktor 22 aufweist. Der Inverter 20 wird von einer Spannungsversorgungseinheit 24 des Haushaltsgeräts mit Energie versorgt. Die Gargerätevorrichtung weist eine Auswerteeinheit 10 auf, die zur Ermittlung eines Verschlussstatus eines Gargefäßes 12 vorgesehen ist. Die Auswerteeinheit 10 weist eine Recheneinheit 26, eine Speichereinheit 28 und ein in der Speichereinheit 28 gespeichertes Betriebsprogramm auf. Die Auswerteeinheit 10 ist dazu vorgesehen, den Verschlussstatus abhängig von einer erfassten Leistungskenngröße P_{K1}, P_{K2} und abhängig von einer von einer Sensoreinheit 16 erfassten Temperaturkenngröße T_{K1}, T_{K2} zu ermitteln (Figuren 1 bis 4). Die Auswerteeinheit 10 ist einstückig mit einer Garautomatikregeleinheit ausgebildet, die dazu vorgesehen ist, die Temperaturkenngröße T_{K1} bzw. T_{K2} auf eine gewünschte, von einem Bediener mittels einer nicht näher dargestellten Einstelleinheit eingestellte Solltemperaturkenngröße T_{Ksoll} zu regeln, und zwar indem mittels der Garautomatikregeleinheit zur Erreichung und Beibehaltung der Solltemperaturkenngröße T_{Ksoll} die Leistungskenngröße P_{K1} bzw. P_{K2} entsprechend eingestellt wird, wodurch bei einem Garautomatikmodus die eingestellten Leistungskenngrößen P_{K1} bzw. P_{K2} der Auswerteeinheit 10 vorliegen. Die Sensoreinheit 16 ist einstückig mit einer Garautomatiksensoreinheit ausgebildet, die dazu vorgesehen ist, die Temperaturkenngröße T_{K1} bzw. T_{K2} zu erfassen. Die Sensoreinheit 16 umfasst ein Infrarotsensormittel 32, das teilweise oberhalb der Kochfeldplatte 18 angeordnet ist. Alternativ oder zusätzlich sind jedoch auch andere, dem Fachmann als sinnvoll erscheinende Sensormittel denkbar, wie insbesondere Sensormittel unterhalb der Kochfeldplatte 18.

Die Auswerteeinheit 10 ist dazu vorgesehen, abhängig von Kenngrößen einen Ermittlungsvorgang zur Ermittlung des Verschlussstatus automatisiert zu aktivieren. Die Auswerteeinheit 10 führt einen Ermittlungsvorgang nur dann durch, wenn ein auf einen Wasserheizprozess schließender Garautomatikmodus aktiviert ist, eine Kenngröße für einen im Wesentlichen konstanten Heizprozess vorliegt und die Temperaturkenngröße T_{K1} bzw. T_{K2} über einem Grenzwert G liegt, der auf eine Gartemperatur von 65°C schließen lässt (Figuren 2 bis 4). Ein im Wesentlichen konstanter Heizprozess beginnt zu Zeitpunkten t₁, t₂, wenn die Temperaturkenngröße T_{K1} bzw. T_{K2} erstmalig die Solltemperaturkenngröße T_{Ksoll} erreicht hat und anschließend auf die Solltemperaturkenngröße T_{Ksoll} geregelt wird.

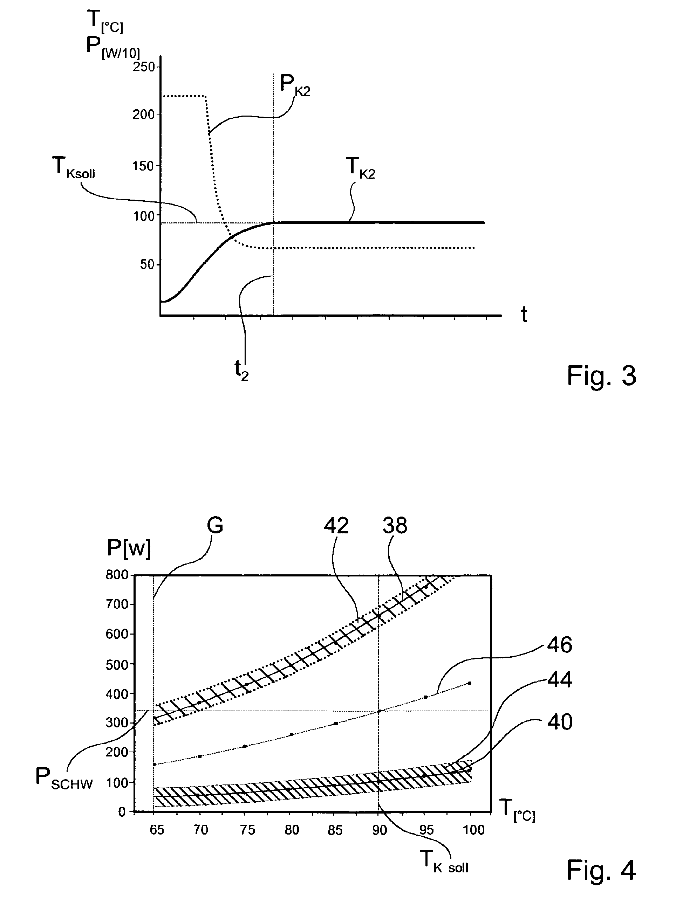

Figur 2 zeigt einen ersten Verlauf der Leistungskenngröße P_{K1} und einen ersten Verlauf der Temperaturkenngröße T_{K1} bei einem Garautomatikmodus, bei dem das Gargefäß 12 mit zwei Liter Wasser 30 befüllt ist, das Gargefäß 12 mit einem in Figur 1 angedeuteten Deckel 34 verschlossen ist und die Temperaturkenngröße T_{K1} auf die Solltemperaturkenngröße T_{Ksoll} von 90°C mit der Garautomatikregeleinheit geregelt wird. Figur 3 zeigt einen zweiten Verlauf der Leistungskenngröße P_{K2} und einen zweiten Verlauf der Temperaturkenngröße T_{K2} bei dem Garautomatikmodus, bei dem das Gargefäß 12 mit zwei Liter Wasser 30 befüllt ist, das Gargefäß 12 unverschlossen, d.h. ohne Deckel 34 versehen ist und die Temperaturkenngröße T_{K2} auf die Solltemperaturkenngröße T_{Ksoll} von 90°C mit der Garautomatikregeleinheit geregelt wird. Ist ein Aufheizvorgang zum Zeitpunkt t₁ bzw. t₂ abgeschlossen und ist die Solltemperaturkenngröße T_{Ksoll} erreicht, werden bei dem mit dem Deckel 34 verschlossenen Gargefäß 12 ca. 100 W benötigt, um die Solltemperaturkenngröße T_{Ksoll} zu halten (Figuren 2 und 4), während bei dem unverschlossenen Gargefäß 12 ca. 660 W benötigt werden (Figuren 3 und 4). Die Auswerteeinheit 10 vergleicht gespeicherte Temperatur- und Leistungskenngrößen mit den erfassten Temperaturkenngrößen T_{K1} bzw. T_{K2} und Leistungskenngrößen P_{K1} bzw. P_{K2}, um den Verschlussstatus zu ermitteln. Liegt bei erreichter Solltemperaturkenngröße T_{Ksoll} eine Leistungskenngröße P_{K1} vor, die oberhalb eines Leistungsschwellwerts P_{Schw} liegt und somit auf einen Verschlussstatus ohne Deckel 34 schließen lässt, wird von der Auswerteeinheit 10 ein von einem Steuersignal gebildetes Warnsignal 13 an eine Ausgabeeinheit 36 ausgegeben, die ein akustisches und optisches Warnsignal 14 an einen Bediener ausgibt, mit dem der Bediener darauf hingewiesen wird, dass ein auf ein unverschlossenes Gargefäß 12 hinweisender Verschlussstatus vorliegt und das Gargefäß 12 vorteilhaft zur Energieeinsparung mit dem Deckel 34 verschlossen werden sollte (Figuren 3 und 4).

In Figur 4 sind in der Auswerteeinheit 10 für eine bestimmte Kochstelle auf der Kochfeldplatte 18 gespeicherte Daten als Kennlinien in einem Diagramm mit einer Leistungskoordinate P und einer Temperaturkoordinate T dargestellt, und zwar ist eine Leistungs-Temperaturkennlinie 38 darstellt, die einen Zusammenhang zwischen Leistungskenngrößen und eingeregelten Temperaturkenngrößen bei unverschlossenem Gargefäß 12 bei einem Wasserheizprozess wiedergibt, und eine Leistungs-Temperaturkennlinie 40, die einen Zusammenhang zwischen Leistungskenngrößen und eingeregelten Temperaturkenngrößen bei geschlossenem Gargefäß 12 bei einem Wasserheizprozess wiedergibt. Den Leistungs-Temperaturkennlinien 38, 40 sind jeweils Variationsbereiche 42, 44 zugeordnet, innerhalb der die Leistungs-Temperaturkennlinien 38, 40 verlaufen und innerhalb derer aufgrund verschiedener Randbedingungen, wie insbesondere Gefäßeigenschaften, Wasserfüllmenge, im Wasser zu garendes Gargut usw., Abweichungen von den Leistungs-Temperaturkennlinien 38, 40 auftreten können. Zwischen den Leistungs-Temperaturkennlinien 38, 40 und den ihnen zugeordneten Variationsbereichen 42, 44 verläuft eine Schwellwertkennlinie 46. Die Schwellwertkennlinie 46 verläuft in Richtung der Leistungskoordinate P betrachtet im Wesentlichen mittig zwischen den Leistungs-Temperaturkennlinien 38, 40. Liegt bei einer aktivierten Ermittlung des Verschlussstatus ein Wert oberhalb der Schwellwertkennlinie 46, werden die Warnsignale 13, 14 ausgegeben. Die Ermittlung des Verschlussstatus durch die Ausgabeeinheit 10 kann von einem Bediener auch grundsätzlich deaktiviert werden, um ohne störende Ausgabe eines Warnsignals 14 bewusst mit geöffnetem Gargefäß 12 garen zu können. Für andere Kochstellen sind andere Daten gespeichert, wodurch vorteilhaft je Kochstelle, insbesondere im Hinblick auf eine vorliegende Größe der jeweiligen Kochstelle, eine exakte Ermittlung erreicht werden kann.

### Bezugszeichen

- 10: Auswerteeinheit
- 12: Gargefäß
- 13: Warnsignal
- 14: Warnsignal
- 16: Sensoreinheit
- 18: Kochfeldplatte
- 20: Inverter
- 22: Induktor
- 24: Spannungsversorgungseinheit
- 26: Recheneinheit
- 28: Speichereinheit
- 30: Wasser
- 32: Infrarotsensormittel
- 34: Deckel
- 36: Ausgabeeinheit
- 38: Leistungs-Temperaturkennlinie
- 40: Leistungs-Temperaturkennlinie
- 42: Variationsbereich
- 44: Variationsbereich
- 46: Schwellwertkennlinie
- P_{K1}: Leistungskenngröße
- P_{K2}: Leistungskenngröße
- T_{K1}: Temperaturkenngröße
- T_{K2}: Temperaturkenngröße
- t₁: Zeitpunkt
- t₂: Zeitpunkt
- P_{schw}: Leistungsschwellwert
- P: Leistungskoordinate
- T: Temperaturkoordinate
- T_{KSoll}: Solltemperaturkenngröße
- G: Grenzwert

## Patentansprüche

1. Gargerätevorrichtung mit einer Auswerteeinheit (10) zur Ermittlung eines Verschlussstatus eines Gargefäßes (12),
**dadurch gekennzeichnet,**
**dass** die Auswerteeinheit (10) dazu vorgesehen ist, den Verschlussstatus zumindest abhängig von wenigstens einer erfassten Leistungskenngröße (P_{K1}, P_{K2}) zu ermitteln.

2. Gargerätevorrichtung nach Anspruch 1,
**dadurch gekennzeichnet,**
**dass** die Auswerteeinheit (10) dazu vorgesehen ist, den Verschlussstatus zumindest abhängig von einer erfassten Temperaturkenngröße (T_{K1}, T_{K2}) zu ermitteln.

3. Gargerätevorrichtung nach Anspruch 1 oder 2,
**dadurch gekennzeichnet,**
**dass** die Auswerteeinheit (10) dazu vorgesehen ist, abhängig von wenigstens einer Kenngröße einen Ermittlungsvorgang zur Ermittlung des Verschlussstatus zumindest teilautomatisiert abzubrechen und/oder zu aktivieren.

4. Gargerätevorrichtung nach Anspruch 3,
**dadurch gekennzeichnet,**
**dass** die Auswerteeinheit (10) dazu vorgesehen ist, als Bedingung wenigstens eine Kenngröße für einen zumindest im Wesentlichen konstanten Heizprozess zu nutzen.

5. Gargerätevorrichtung nach Anspruch 3 oder 4,
**dadurch gekennzeichnet,**
**dass** die Auswerteeinheit (10) dazu vorgesehen ist, als Bedingung wenigstens eine Aktivierung eines Garautomatikmodus zu nutzen.

6. Gargerätevorrichtung nach einem der Ansprüche 3 bis 5,
**dadurch gekennzeichnet,**
**dass** die Auswerteeinheit (10) dazu vorgesehen ist, als Bedingung wenigstens eine auf einen Wasserheizprozess schließende Kenngröße zu nutzen.

7. Gargerätevorrichtung nach einem der Ansprüche 3 bis 6,
**dadurch gekennzeichnet,**
**dass** die Auswerteeinheit (10) dazu vorgesehen ist, als Bedingung zumindest ein Erreichen wenigstens eines Grenzwerts (G) wenigstens einer Kenngröße zu nutzen.

8. Gargerätevorrichtung nach einem der vorhergehenden Ansprüche,
**dadurch gekennzeichnet,**
**dass** die Auswerteeinheit (10) dazu vorgesehen ist, wenigstens eine ermittelte Kenngröße mit einer gespeicherten Kenngröße zu vergleichen, um den Verschlussstatus zu ermitteln und/oder um zumindest auf eine Gargutgruppe zu schließen.

9. Gargerätevorrichtung nach einem der vorhergehenden Ansprüche,
**dadurch gekennzeichnet,**
**dass** die Auswerteeinheit (10) dazu vorgesehen ist, wenigstens ein Warnsignal (13, 14) auszugeben, wenn ein bestimmter Verschlussstatus ermittelt wurde.

10. Gargerätevorrichtung nach einem der vorhergehenden Ansprüche,
**gekennzeichnet durch**
wenigstens eine Sensoreinheit (16), die zumindest teilweise einstückig mit einer Garautomatiksensoreinheit ausgebildet ist.

11. Haushaltsgerät mit einer Gargerätevorrichtung nach einem der vorhergehenden Ansprüche.

12. Verfahren zum Erkennen eines Verschlussstatus eines Gargefäßes (12),
**dadurch gekennzeichnet,**
**dass** der Verschlussstatus zumindest abhängig von wenigstens einer erfassten Leistungskenngröße (P_{K1}, P_{K2}) ermittelt wird.

## Claims

1. Cooking appliance apparatus having an evaluation unit (10) for determining a closure status of a cooking vessel (12),
**characterised in that**
the evaluation unit (10) is provided to determine the closure status at least as a function of at least one detected power characteristic (P_{K1}, P_{K2}).

2. Cooking appliance apparatus according to claim 1,
**characterised in that**
the evaluation unit (10) is provided to determine the closure status at least as a function of a detected temperature characteristic (T_{K1}, T_{K2}).

3. Cooking appliance apparatus according to claim 1 or 2,
**characterised in that**
the evaluation unit (10) is provided to interrupt and/or activate a determination process for determining the closure status in an at least partially automated manner as a function of at least one characteristic.

4. Cooking appliance apparatus according to claim 3,
**characterised in that**
the evaluation unit (10) is provided to use at least one characteristic of an at least essentially constant heating process as a condition.

5. Cooking appliance apparatus according to claim 3 or 4,
**characterised in that**
the evaluation unit (10) is provided to use at least activation of an automatic cooking mode as a condition.

6. Cooking appliance apparatus according to one of claims 3 to 5,
**characterised in that**
the evaluation unit (10) is provided to use at least one characteristic indicating a water heating process as a condition.

7. Cooking appliance apparatus according to one of claims 3 to 6,
**characterised in that**
the evaluation unit (10) is provided to use at least the reaching of at least one limit value (G) of at least one characteristic as a condition.

8. Cooking appliance apparatus according to one of the preceding claims,
**characterised in that**
the evaluation unit (10) is provided to compare at least one determined characteristic with a stored characteristic to determine the closure status and/or to conclude at least one food group.

9. Cooking appliance apparatus according to one of the preceding claims,
**characterised in that**
the evaluation unit (10) is provided to output at least one warning signal (13, 14) when a specified closure status has been determined.

10. Cooking appliance apparatus according to one of the preceding claims,
**characterised by**
at least one sensor unit (16), which is configured at least partially as a single piece with an automatic cooking system sensor unit.

11. Domestic appliance having a cooking appliance apparatus according to one of the preceding claims.

12. Method for identifying a closure status of a cooking vessel (12),
**characterised in that**
the closure status is determined at least as a function of at least one detected power characteristic (P_{K1}, P_{K2}).

## Revendications

1. Dispositif d'appareil de cuisson comprenant une unité d'évaluation (10) destinée à déterminer un état de fermeture d'un récipient de cuisson (12),
**caractérisé en ce**
**que** l'unité d'évaluation (10) est ménagée pour déterminer l'état de fermeture au moins en fonction d'au moins une grandeur caractéristique de puissance saisie (P_{K1}, P_{K2}).

2. Dispositif d'appareil de cuisson selon la revendication 1,
**caractérisé en ce**
**que** l'unité d'évaluation (10) est ménagée pour déterminer l'état de fermeture au moins en fonction d'au moins une grandeur caractéristique de température saisie (T_{K1}, T_{K2}).

3. Dispositif d'appareil de cuisson selon la revendication 1 ou 2,
**caractérisé en ce**
**que** l'unité d'évaluation (10) est ménagée pour interrompre et/ou activer au moins de manière partiellement automatisée, en fonction d'au moins une grandeur caractéristique, une opération de détermination destinée à déterminer l'état de fermeture.

4. Dispositif d'appareil de cuisson selon la revendication 3,
**caractérisé en ce**
**que** l'unité d'évaluation (10) est ménagée pour exploiter, en tant que condition, au moins une grandeur caractéristique pour un processus de chauffage au moins essentiellement constant.

5. Dispositif d'appareil de cuisson selon la revendication 3 ou 4,
**caractérisé en ce**
**que** l'unité d'évaluation (10) est ménagée pour exploiter, en tant que condition, au moins une activation d'un mode automatique de cuisson.

6. Dispositif d'appareil de cuisson selon l'une quelconque des revendications 3 à 5,
**caractérisé en ce**
**que** l'unité d'évaluation (10) est ménagée pour exploiter, en tant que condition, au moins une grandeur caractéristique achevant un processus de chauffage d'eau.

7. Dispositif d'appareil de cuisson selon l'une quelconque des revendications 3 à 6,
**caractérisé en ce**
**que** l'unité d'évaluation (10) est ménagée pour exploiter, en tant que condition, au moins une obtention d'au moins une valeur limite (G) d'au moins une grandeur caractéristique.

8. Dispositif d'appareil de cuisson selon l'une quelconque des revendications précédentes,
**caractérisé en ce**
**que** l'unité d'évaluation (10) est ménagée pour comparer au moins une grandeur caractéristique déterminée avec une grandeur caractéristique mémorisée afin de déterminer l'état de fermeture et/ou de conclure à au moins un groupe de produits à cuire.

9. Dispositif d'appareil de cuisson selon l'une quelconque des revendications précédentes,
**caractérisé en ce**
**que** l'unité d'évaluation (10) est ménagée pour sortir au moins un signal d'avertissement (13, 14) lorsqu'un état de fermeture déterminé a été détecté.

10. Dispositif d'appareil de cuisson selon l'une quelconque des revendications précédentes,
**caractérisé par**
au moins une unité de capteur (16) qui est réalisée au moins en partie d'une seule pièce avec une unité de capteur automatique de cuisson.

11. Appareil ménager comprenant un dispositif d'appareil de cuisson selon l'une quelconque des revendications précédentes.

12. Procédé destiné à identifier un état de fermeture d'un récipient de cuisson (12)
**caractérisé en ce**
**que** l'état de fermeture est déterminé au moins en fonction d'au moins une grandeur caractéristique de puissance saisie (P_{K1}, P_{K2}).
